# EUROPÄISCHE PATENTSCHRIFT

(11) **EP 4 045 233 B1**
(45) Veröffentlichungstag und Bekanntmachung des Hinweises auf die Patenterteilung: **03.04.2024**
(21) Anmeldenummer: 20781388.2
(22) Anmeldetag: 06.10.2020
(51) Int. Cl.: B25F 5/00, H02J 7/00

(54) **ADAPTER**
ADAPTOR
ADAPTATEUR

(30) Priorität: 16.10.2019 EP 19203585
(43) Veröffentlichungstag der Anmeldung: 24.08.2022
(73) Patentinhaber: Hilti Aktiengesellschaft, 9494 Schaan (LI)
(72) Erfinder: NITZSCHNER, Michael, 86156 Augsburg (DE); VENKATRAMAN, Muralidhar, 86916 KAUFERING (DE); JANCZYK, Leonard, 86899 Landsberg am Lech (DE)
(74) Vertreter: Hilti Aktiengesellschaft Corporate Intellectual Property
(86) Internationale Anmeldenummer: PCT/EP2020/077939
(87) Internationale Veröffentlichungsnummer: WO 2021/073939

(56) Entgegenhaltungen:
- WO-A1-2014/014128
- US-A1- 2011 197 389
- US-A1- 2018 054 032

## Beschreibung

Die vorliegende Erfindung betrifft einen Adapter zum wiederlösbaren Verbinden einer Werkzeugmaschine mit wenigstens einem Akkumulator. Ein Adapter gemäß dem Oberbegriff des Anspruchs 1 ist bereits aus der US 2018/054032 A1 bekannt.

Darüber hinaus betrifft die vorliegende Erfindung ein System enthaltend eine Werkzeugmaschine mit wenigstens einem Akkumulator zur Versorgung der Werkzeugmaschine mit elektrischer Energie und einen Adapter, wobei der Adapter zum wiederlösbaren Verbinden der Werkzeugmaschine mit dem wenigstens einen Akkumulator dient.

Des Weiteren betrifft die vorliegende Erfindung ein Verfahren zum Steuern und Regeln eines Adapters zum Verbinden einer Werkzeugmaschine mit wenigstens einem Akkumulator.

Moderne Werkzeugmaschinen, wie beispielsweise Bohrhämmer, Sägen, Schleifgeräte oder dergleichen, können durch einen austauschbaren Akkumulator mit elektrischer Energie versorgt werden. Sowohl die Werkzeugmaschinen als auch die Akkumulatoren verfügen meist zusätzlich über Kommunikationsschnittstellen mit deren Hilfe zahlreiche Informationen und Daten zwischen der Werkzeugmaschine und dem Akkumulator ausgetauscht werden können. Die Schnittstellen der Werkzeugmaschine und des Akkumulators müssen zueinander passen bzw. aufeinander abgestimmt sein, damit eine gewünschte bilaterale Kommunikation zwischen der Werkzeugmaschine und dem Akkumulator stattfinden kann. Für gewöhnlich ist die Kompatibilität der beiden Schnittstellen zueinander unproblematisch, wenn sowohl die Werkzeugmaschine als auch der Akkumulator aus einer sich entsprechenden oder gemeinsamen Generation entstammen. Derartige Werkzeugmaschinen und zu den Werkzeugmaschinen gehörende Akkumulatoren weisen dann generell zueinander abgestimmte bzw. zueinander passende Schnittstellen auf.

Problemen entstehen jedoch, wenn die Schnittstellen der Werkzeugmaschinen und der Akkumulatoren technisch so unterschiedlich sind, dass keine ausreichende Kompatibilität für eine gewünschte Kommunikation (d.h. Datenaustausch) zwischen Werkzeugmaschine und Akkumulator und/oder für eine ausreichende Bereitstellung an elektrischer Energie gegeben ist. Aufgabe der vorliegenden Erfindung ist es daher, einen Adapter zum wiederlösbaren Verbinden einer Werkzeugmaschine mit wenigstens einem Akkumulator bereitzustellen, mit dem das vorstehend genannte Problem gelöst und eine ausreichende Kompatibilität zwischen einer Werkzeugmaschine und wenigstens einem Akkumulator erreicht werden kann.

Des Weiteren ist es ebenfalls Aufgabe der vorliegenden Erfindung ein System bereitzustellen, das eine Werkzeugmaschine mit wenigstens einem Akkumulator zur Versorgung der Werkzeugmaschine mit elektrischer Energie und einen Adapter enthält, sodass das vorstehend genannte Problem gelöst und eine ausreichende Kompatibilität zwischen einer Werkzeugmaschine und wenigstens einem Akkumulator erreicht werden kann.

Die Aufgabe wird entsprechend gelöst durch den Gegenstand des unabhängigen Anspruchs 1, 5 und 9. Weitere vorteilhafte Ausgestaltungsformen der Erfindung finden sich in den entsprechenden Unteransprüchen.

Die Aufgabe wird insbesondere gelöst durch einen Adapter zum wiederlösbaren Verbinden einer Werkzeugmaschine mit wenigstens einem Akkumulator.

Erfindungsgemäß enthält der Adapter eine erste Schnittstelle zum wiederlösbaren Verbinden der Werkzeugmaschine mit dem Adapter sowie eine zweite Schnittstelle zum wiederlösbaren Verbinden des wenigstens einen Akkumulators mit dem Adapter, eine erste Steuerungselektronik zum Steuern und Regeln der Funktionalität der Werkzeugmaschine sowie eine zweite Steuerungselektronik zum Steuern und Regeln der Funktionalität des Akkumulators und einen Schaltelement zum reversiblen Einstellen der zweiten Steuerungselektronik in einen Aktivierungsmodus oder Deaktivierungsmodus, wobei im Aktivierungsmodus wenigstens ein erster Transistor so ansteuerbar ist, dass elektrische Energie von dem wenigstens einen Akkumulator zu der Werkzeugmaschine gelangen kann.

Erfindungsgemäß ist ein Sensor zur Erfassung wenigstens eines Parameters der Werkzeugmaschine und ein zweiter Transistor enthalten, wobei der zweite Transistor ausgestaltet ist die Zuführung der elektrischen Energie von dem Akkumulator an die Werkzeugmaschine zumindest zeitweilig zu unterbrechen, wenn ein von dem Sensor erfasste Parameter einen vorbestimmten Schwellwert erreicht. Bei dem Parameter kann es sich um Werte der elektrischen Spannung, Wert der elektrischen Stromstärke, Temperaturwerte, den Ladezustand des Akkumulators oder dergleichen handeln. Mit Hilfe des zweiten Transistors, der im Wesentlichen als Schaltelement zur wahlweisen Unterbrechung einer Strom- bzw. Spannungsversorgung dient, kann beim Erreichen eines Schwellwertes vorsorglich die Strom- bzw. Spannungsversorgung unterbrochen werden.

Gemäß einem weiteren vorteilhaften Ausführungsbeispiel der vorliegenden Erfindung kann es möglich sein, dass anstelle eines ersten und zweiten Transistors lediglich ein einziger Transistor in dem Adapter enthalten ist. Der einzige Transistor kann dabei in der zweiten Steuerungselektronik enthalten sein.

Des Weiteren ist es gemäß einem weiteren vorteilhaften Ausführungsbeispiel der vorliegenden Erfindung auch möglich, dass ein erster, zweiter und dritter Transistor in dem Adapter enthalten sind. Ein erster Transistor kann dabei in einem Pluspfad (Plus-Leitung) einer Stromversorgungsleitung positioniert sein. Ein zweiter Transistor kann dabei in einem Minuspfad (d.h. Minus-Leitung) einer Stromversorgungsleitung positioniert sein. Ein dritter Transistor kann aus Sicherheitsgründen in einem übergeordneten Hauptstrompfad (d.h. Hauptstromleitung).

Bei dem ersten und/oder zweiten Transistor kann es sich um einen Metall-Oxid-Halbleiter-Feldeffekttransistor (MOSFET) oder einen anderen geeigneten Feldeffekttransistor (FET) handeln. Gemäß einer weiteren Ausführungsform der vorliegenden Erfindung kann anstelle des ersten und/oder zweiten Transistors auch entsprechend ein erstes und/oder zweites Schaltelement vorgesehen sein.

Entsprechend einer vorteilhaften Ausführungsform der vorliegenden Erfindung kann es möglich sein, dass wenigstens eine Anzeigeeinrichtung zur Anzeige wenigstens eines Zustandes des Adapters enthalten ist.

Gemäß einer vorteilhaften Ausführungsform der vorliegenden Erfindung kann es möglich sein, dass wenigstens ein Spannungsteiler enthalten ist zur Versorgung wenigstens der ersten oder zweiten Steuerungselektronik mit elektrischer Energie. Hierdurch ist eine Versorgung der ersten oder zweiten Steuerungselektronik mit elektrischer Energie sichergestellt.

Des Weiteren wird die Aufgabe insbesondere gelöst durch ein System enthaltend eine Werkzeugmaschine mit wenigstens einem Akkumulator zur Versorgung der Werkzeugmaschine mit elektrischer Energie und einen Adapter, wobei der Adapter zum wiederlösbaren Verbinden der Werkzeugmaschine mit dem wenigstens einen Akkumulator dient.

Erfindungsgemäß enthält dabei der Adapter eine erste Schnittstelle zum wiederlösbaren Verbinden der Werkzeugmaschine mit dem Adapter sowie eine zweite Schnittstelle zum wiederlösbaren Verbinden des wenigstens einen Akkumulators mit dem Adapter, eine erste Steuerungselektronik zum Steuern und Regeln der Funktionalität der Werkzeugmaschine sowie eine zweite Steuerungselektronik zum Steuern und Regeln der Funktionalität des Akkumulators und einen Schaltelement zum reversiblen Einstellen der zweiten Steuerungselektronik in einen Aktivierungsmodus oder Deaktivierungsmodus, wobei im Aktivierungsmodus wenigstens ein erster Transistor so ansteuerbar ist, dass elektrische Energie von dem wenigstens einen Akkumulator zu der Werkzeugmaschine gelangen kann, enthält.

Gemäß einer vorteilhaften Ausführungsform der vorliegenden Erfindung kann es möglich sein, dass wenigstens ein Sensor zur Erfassung wenigstens eines Parameters der Werkzeugmaschine und ein zweiter Transistor enthalten ist, wobei der zweite Transistor ausgestaltet ist die Zuführung der elektrischen Energie von dem Akkumulator an die Werkzeugmaschine zumindest zeitweilig zu unterbrechen, wenn ein von dem Sensor erfasste Parameter einen vorbestimmten Schwellwert erreicht.

Bei dem ersten und/oder zweiten Transistor kann es sich um einen Metall-Oxid-Halbleiter-Feldeffekttransistor (auch MOSFET genannt) oder einen anderen geeigneten Feldeffekttransistor (auch FET genannt) handeln.

Entsprechend einer vorteilhaften Ausführungsform der vorliegenden Erfindung kann es möglich sein, dass wenigstens eine Anzeigeeinrichtung zur Anzeige wenigstens eines Zustandes des Adapters enthalten ist.

Gemäß einer vorteilhaften Ausführungsform der vorliegenden Erfindung kann es möglich sein, dass wenigstens ein Spannungsteiler enthalten ist zur Versorgung wenigstens der ersten oder zweiten Steuerungselektronik mit elektrischer Energie.

Darüber hinaus wird die Aufgabe insbesondere gelöst durch ein Verfahren zum Steuern und Regeln eines Adapters zum Verbinden einer Werkzeugmaschine mit wenigstens einem Akkumulator.

Erfindungsgemäß enthält dabei das Verfahren die Verfahrensschritte:
- Verbinden des Adapters mit der Werkzeugmaschine und dem wenigstens einen Akkumulator;
- Einstellen des Adapters von einem Deaktivierungsmodus in einen Aktivierungsmodus; und
- Ansteuern eines ersten Transistors, sodass elektrische Energie von dem wenigstens einen Akkumulator zu der Werkzeugmaschine gelangen kann.

Gemäß einer vorteilhaften Ausführungsform der vorliegenden Erfindung kann es möglich sein, dass der Verfahrensschritt eines Anzeigens wenigstens eines Zustandes des Adapters mittels wenigstens einer Anzeigeeinrichtung enthalten ist.

Das wiederlösbare Verbinden der Werkzeugmaschine mit dem wenigstens einen Akkumulator bedeutet dabei eine mechanische, elektrische und/oder elektronische Verbindung. Die Verbindung kann auch als Kopplung bezeichnet werden.

Bei der Funktionalität des Akkumulators kann es sich beispielsweise um die Abgabe an elektrischer Energie von den Akku-Zellen des wenigstens einen Akkumulators an die Werkzeugmaschine, die Einstellung der Stromstärke, das Erfassen und die Überwachung von Temperaturwerten und/oder die Einstellung und das Erfassen der elektrischen Spannung der Akku-Zellen des wenigstens einen Akkumulators handeln. Die Funktionalität des Akkumulators kann als Funktionen des Akkumulators bezeichnet werden.

Im Gegensatz dazu kann sich bei der Funktionalität der Werkzeugmaschine um die Aufnahme elektrischer Energie von den Akku-Zellen des wenigstens einen Akkumulators an die Werkzeugmaschine, das Erfassen der Stromstärke, das Erfassen und die Überwachung von Temperaturwerten und/oder das Erfassen der elektrischen Spannung handeln. Die Funktionalität der Werkzeugmaschine kann als Funktionen des Akkumulators bezeichnet werden.

Sowohl die Werkzeugmaschine als auch der Akkumulator weist eine Funktion auf, mit der insbesondere eine Über- oder Unterversorgung an elektrischer Energie, ein Ladezustand, ein Temperaturwert, eine elektrische Spannung und/oder eine elektrische Stromstärke erfasst werden kann. Zur Realisierung einer derartigen Funktion ist dabei wenigstens ein geeigneter Sensor vorgesehen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: einen Querschnitt durch ein erfindungsgemäßes System enthaltend eine Werkzeugmaschine, einen Akkumulator sowie einen erfindungsgemäßen Adapter positioniert zwischen der Werkzeugmaschine dem Akkumulator;
- Figur 2: eine Detailansicht der Werkzeugmaschine, des Akkumulators sowie des erfindungsgemäßen Adapters; und

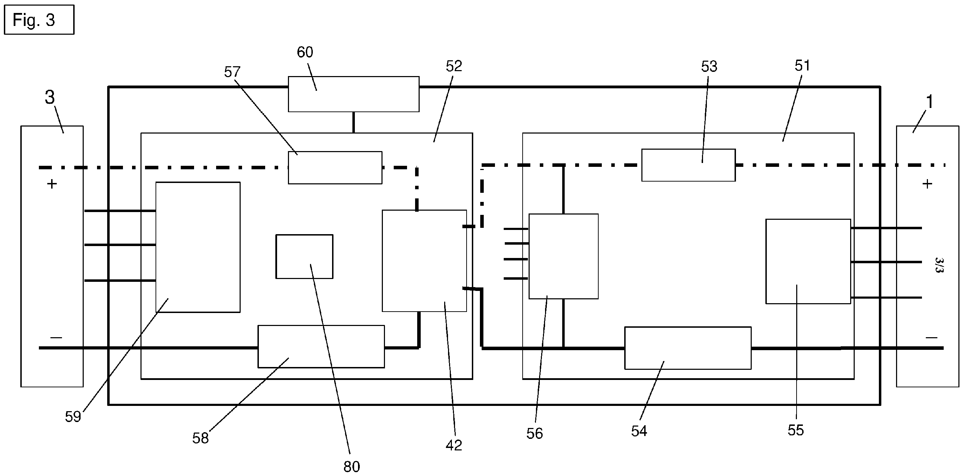

- Figur 3: eine schematische Ansicht auf die einzelnen Komponenten des erfindungsgemäßen Adapters.

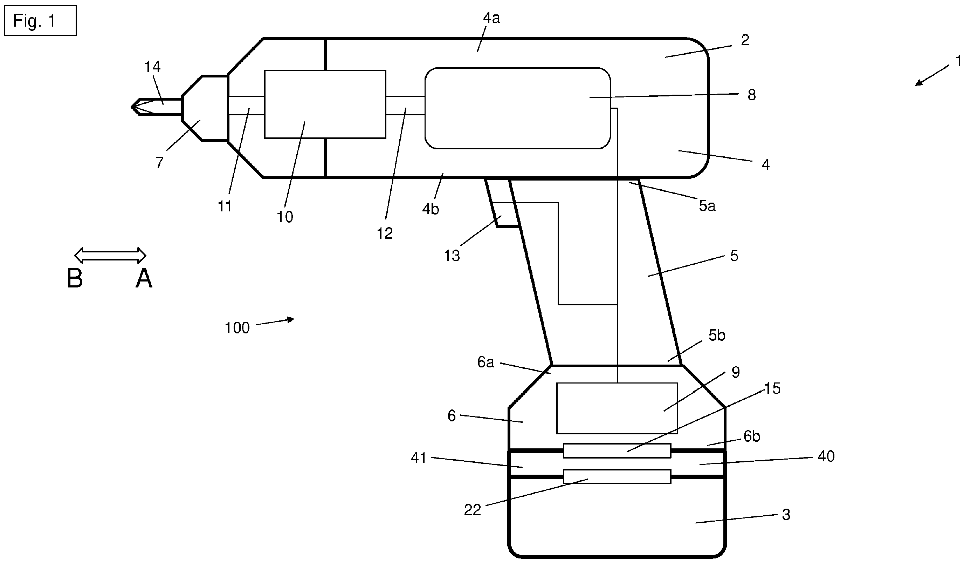

In Figur 1 ist ein System 1 mit einer Werkzeugmaschine 2, einem Adapter 40 und einem Akkumulator 3 dargestellt.

Der Akkumulator 3 ist über den Adapter 40 mit der Werkzeugmaschine verbunden und dient zur Versorgung der elektrischen Verbraucher der Werkzeugmaschine 2 mit elektrischer Energie. Bei der Versorgung fließt elektrischer Strom von dem Akkumulator 3 durch den Adapter 40 zu der Werkzeugmaschine 2.

Wie in Figur 1 dargestellt, ist die Werkzeugmaschine 2 in Form eines Akku-Schraubers dargestellt. Gemäß anderer alternativer Ausführungsformen kann die Werkzeugmaschine 2 auch in Form einer Bohrmaschine, einer Säge, eines Schleifgeräts oder dergleichen ausgestaltet sein.

Die als Akku-Schrauber ausgestaltete Werkzeugmaschine 2 enthält im Wesentlichen ein Gehäuse 4, ein Handgriff 5, ein Fussteil 6, eine Werkzeugaufnahme 7, einen elektrischen Antrieb 8 in Form eines Elektromotors, eine Steuerung 9, ein Getriebe 10, eine Antriebswelle 11, eine Abtriebswelle 12 und einen Aktivierungsschalter 13. Bei dem Elektromotor kann es sich um einen bürstenlosen Motor handeln.

Der als Elektromotor ausgestaltet elektrische Antrieb 8, das Getriebe 10, die Antriebswelle 11, die Abtriebswelle 12 und die Steuerung 9 sind in dem Gehäuse 4 positioniert. Der Antrieb 8, das Getriebe 10, die Antriebswelle 11 und die Abtriebswelle 12 sind so zueinander und in dem Gehäuse 10 positioniert, dass ein von dem Antrieb 8 erzeugtes Drehmoment an die Abtriebswelle 12 übertragen wird. Die Abtriebswelle 12 überträgt das Drehmoment auf das Getriebe 10, welches wiederum ein Drehmoment an die Antriebswelle 11 weitergibt. Über die Antriebswelle 11 wird durch Übertragung des Drehmoments die Werkzeugaufnahme 7 angetrieben. Wie in Figur 1 dargestellt, ist in der Werkzeugaufnahme 7 ein Werkzeug 14 in Form eines Bits gehalten. Mit Hilfe des Bits kann eine Schraube in einen Werkstoff eingeschraubt werden. Weder die Schraube noch der Werkstoff sind in den Figuren dargestellt.

Wie weiterhin in Figur 1 gezeigt, enthält das Gehäuse 4 eine Oberseite 4a und eine Unterseite 4b. Der Handgriff 5 enthält ein erstes Ende 5a und ein zweites Ende 5b. An der Unterseite 4b des Gehäuses 4 ist das erste Ende 5a des Handgriffs 5 befestigt. Des Weiteren enthält das Fussteil 6 ein oberes Ende 6a und ein unteres Ende 6b. Das obere Ende 6a des Fussteils 6 ist an dem zweiten Ende 5b des Handgriffs 5 befestigt. Das untere Ende 6b des Fussteils 6 enthält eine Schnittstelle 15 und dient zum mechanischen, elektrischen und elektronischen Verbinden der Werkzeugmaschine 2 mit dem Adapter 40. Die Verbindung ist dabei wieder lösbar.

Zur Aufnahme von elektrischer Energie (bzw. elektrischem Strom) enthält die Schnittstelle 15 eine Anzahl an Stromanschlüssen. Die Schnittstelle 15 enthält darüber hinaus Datenanschlüsse zum Senden und Empfangen von Informationen und Daten in Form von Signalen.

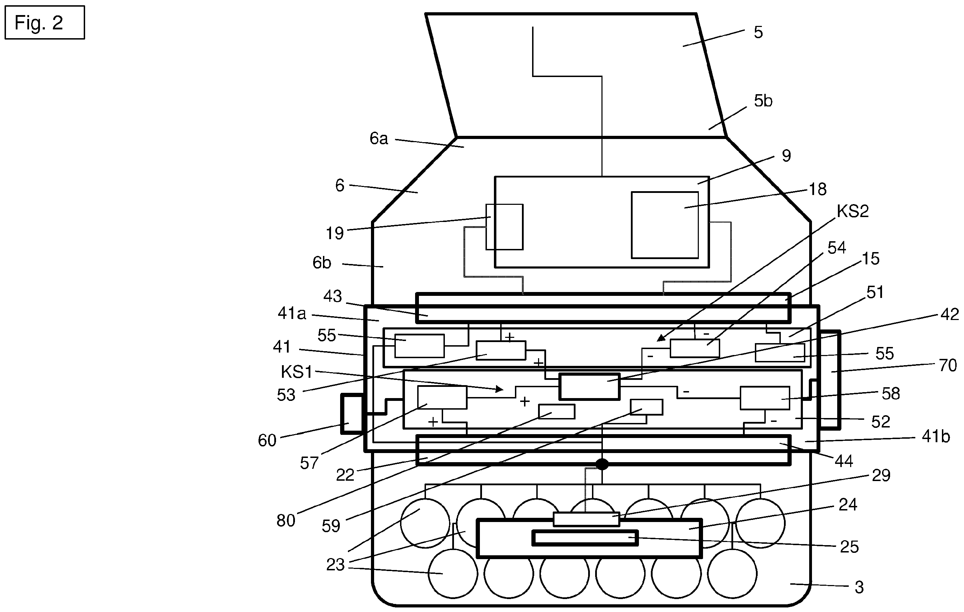

Wie den Figuren 1 und 2 zu entnehmen ist, ist die Steuerung 9 der Werkzeugmaschine 2 in dem Fussteil 6 der Werkzeugmaschine 2 positioniert. Die Steuerung 9 der Werkzeugmaschine 2 dient zum Steuern und Regeln verschiedener Vorgänge in Bezug auf die Werkzeugmaschine 2 sowie in Bezug auf den Akkumulator 3. Die Steuerung 9 steuert insbesondere den Strom bzw. die Stromstärke, die von dem Akkumulator 3 zu der Werkzeugmaschine 2 und insbesondere zum Antreiben des als Elektromotor ausgebildeten Antriebs 8 fließt. Des Weiteren dient die Steuerung 9 auch zum Erfassen der elektrischen Spannung, die durch den Akkumulator anliegt.

Die Steuerung 9 der Werkzeugmaschine 2 enthält dabei einen Mikrocontroller 18 (auch als MCU bezeichnet) sowie eine Datenschnittstelle 19 als Bestandteil eines Kommunikationsschaltkreises für eine bilaterale Kommunikation zwischen dem Akkumulator 3 und der Werkzeugmaschine 2.

Der Akkumulator 3 enthält im Wesentlichen ein Gehäuse 21 mit einer Akku-Schnittstelle 22. In dem Gehäuse 21 des Akkumulators 3 sind eine Vielzahl an Energiespeicherzellen 23 sowie eine Steuerungselektronik 24 mit einem Mikrocontroller 25.

Der Akkumulator 3 enthält des Weiteren eine Datenschnittstelle 29 als Bestandteil des Kommunikationsschaltkreises für die bilaterale Kommunikation zwischen dem Akkumulator 3 und der Werkzeugmaschine 2.

Die Energiespeicherzellen 23 können auch als Akku-Zellen bezeichnet werden und dienen zum Aufnehmen, Speichern und Bereitstellen einer elektrischen Energie bzw. einer elektrischen Spannung.

Die Akku-Schnittstelle 22 ist an einer Seite des Gehäuses 21 positioniert. Die Akku-Schnittstelle 22 enthält eine Anzahl an Stromsteckern zum Aufnehmen und Abgeben von elektrischem Strom sowie Datensteckern zum Senden und Empfangen von Signalen zwischen der Werkzeugmaschine 2 und dem Akkumulator 3. Über die Stromstecker kann der elektrische Strom von den Energiespeicherzellen 23 abgegeben werden.

Die Stromstecker des Akkumulators 3 sind mit den Stromanschlüssen der Werkzeugmaschine 2 verbunden. Ebenso sind die Datenstecker des Akkumulators 3 mit den Datenanschlüssen der Werkzeugmaschine 2 verbunden.

Durch die Verbindung kann elektrischer Strom von den Energiespeicherzellen 23 des Akkumulators 3 zu der Werkzeugmaschine 2 fließen. Des Weiteren können Signale zur Kommunikation zwischen dem Akkumulator 3 und der Werkzeugmaschine 2 ausgetauscht werden.

Wie Figur 1 und 2 gezeigt ist der Adapter 40 zwischen der Werkzeugmaschine 2 und dem Akkumulator 3 positioniert. Der Adapter 40 ist dabei sowohl mit der Werkzeugmaschine 2 als auch mit dem Akkumulator 3 wiederlösbar verbunden.

Der Adapter 40 enthält ein Gehäuse 41 mit einer Oberseite 41a sowie einer Unterseite 41b. Des Weiteren enthält der Adapter 40 im Wesentlichen eine erste Schnittstelle 43, eine zweite Schnittstelle 44, eine erste Steuerungselektronik 51, eine zweite Steuerungselektronik 52, ein Schaltelement 60 sowie eine Anzeigeeinrichtung 70.

Darüber hinaus enthält der Adapter 40 einen Sensor 80 zur Erfassung wenigstens eines Parameters der Werkzeugmaschine 1. Bei den Parametern kann es sich um Temperatur, Spannung, Stromstärke, Betriebszustand oder dergleichen handeln.

Die erste Steuerungselektronik 51 dient zum Steuern und Regeln der Funktionalität der Werkzeugmaschine 2 in Bezug auf den Akkumulator 3 als Energieversorgung und die zweite Steuerungselektronik dient zum Steuern und Regeln der Funktionalität des Akkumulators 3 in Bezug auf eine Werkzeugmaschine 2 als Empfänger von der vom Akkumulator 3 abgegebenen elektrischen Energie.

Die erste Schnittstelle 43 ist dabei an der Oberseite 41a des Adapter-Gehäuses 41 und die zweite Schnittstelle 44 ist an der Unterseite 41b des Adapter-Gehäuses 41 positioniert. Die erste Schnittstelle 43 ist so ausgestaltet, dass eine wiederlösbare Verbindung mit der Schnittstelle 15 der Werkzeugmaschine 2 erzeugt werden kann. Die zweite Schnittstelle 44 ist wiederum so ausgestaltet, dass eine wiederlösbare Verbindung mit der Akku-Schnittstelle 22 des Akkumulators 3 erzeugt werden kann.

Die erste Steuerungselektronik 51 enthält einen ersten Transistor 53, eine erste Strommesseinrichtung 54, eine erste Kommunikationseinrichtung 55 und eine Spannungseinrichtung 56.

Die Spannungseinrichtung 56 ist mit den einzelnen Akku-Zellen 23 verbunden und dient zum Erfassen und Überwachen der elektrischen Spannung der einzelnen Akku-Zellen 23. Die Kommunikationseinrichtung 55 dient zur Kommunikation mit der Werkzeugmaschine 2 und ist ausgestaltet, um Daten zu senden und zu empfangen.

Die zweite Steuerungselektronik 52 enthält einen Elektromotortreiber 42, einen zweiten Transistor 57, eine zweite Strommesseinrichtung 58 sowie eine zweite Kommunikationseinrichtung 59. Die zweite Kommunikationseinrichtung 59 dient zur Kommunikation mit dem Akkumulator 3 und ist ausgestaltet, um Daten zu senden und zu empfangen.

Sowohl der erste Transistor 53 als auch der zweite Transistor 57 sind in dem angeführten Ausführungsbeispiel als MOSFET ausgestaltet. Die erste und zweite Strommesseinrichtung 54, 58 können auch als Strommessgerät, Strommesser oder Amperemeter bezeichnet werden.

Wie in Figur 2 gezeigt ist an einer Außenseite des Gehäuses 41 das Schaltelement 60 sowie die Anzeigeeinrichtung 70 positioniert.

Die Schnittstelle 15 der Werkzeugmaschine 2 ist inkompatible mit der Akku-Schnittstelle 22 des Akkumulators 3. Um den Akkumulator 3 dennoch mit einer Werkzeugmaschine 2 zu verbinden, wird der Adapter 40 so zwischen Werkzeugmaschine 2 und Akkumulator 3 gebracht, dass die erste Schnittstelle 43 des Adapters 40 mit der Schnittstelle 15 der Werkzeugmaschine 2 und die zweite Schnittstelle 44 des Adapters 40 mit der Akku-Schnittstelle 22 des Akkumulators 3 verbunden wird. Auf diese Weise sind der Akkumulator 3 und die Werkzeugmaschine 2 mittelbar miteinander verbunden.

Kompatibilitätsprobleme bestehen, wenn die Schnittstellen mechanisch, elektrisch und/oder elektronisch nicht zueinander passen. Auch wenn die Schnittstellen mechanisch miteinander verbunden werden können, kann eine elektronische Inkompatibilität vorliegen. Bei einer elektronischen Inkompatibilität wird zumeist kein geeignetes Signal von der Werkzeugmaschine 2 an den Akkumulator 3 durchgestellt, woraufhin der Akkumulator 3 elektrische Energie zu der Werkzeugmaschine 2 sendet.

Um elektrische Energie von den Akku-Zelle 23 des Akkumulators 3 zu der Werkzeugmaschine 2 gelangen zu lassen, wird zunächst der Schaltelement 60 betätigt. Durch das Betätigen des Schaltelements 60 wird ein Signal an die zweite Steuerungselektronik 52 in einen Betriebszustand (auch Modus genannt) versetzt, bei dem der zweite Transistor 57 aktiviert und ein erster Stromkreis KS1 in der zweiten Steuerungselektronik 52 geschlossen wird. Durch die Aktivierung des zweiten Transistors 57 und den geschlossenen Stromkreis KS1 kann elektrische Energie von dem Akkumulator 3 in den Adapter 40 gelangen.

Wie der Figur 1 zu entnehmen ist, ist der Aktivierungsschalter 13 an einer 5c Vorderseite des Handgriffs 5 positioniert. Durch ein Bewegen des Aktivierungsschalters 13 in Richtung A kann ein Signal von dem Aktivierungsschalter 13 an die Steuerung 9 gesendet werden, wodurch die Steuerung 9 wiederum ein Signal über die Schnittstellen 15, 43 an die erste Steuerungselektronik 51 des Adapters 40 sendet. Durch das Signal wird der erste Transistor 53 aktiviert und ein zweiter Stromkreis KS2 in der ersten Steuerungselektronik 51 geschlossen. Durch die Aktivierung des ersten Transistors 53 und den geschlossenen Stromkreis KS2 kann nun die elektrische Energie von dem Adapter 40 zu der Werkzeugmaschine 2 und insbesondere zu dem Antrieb 8 gelangen.

## Patentansprüche

1. Adapter (40) zum wiederlösbaren Verbinden einer Werkzeugmaschine (1) mit wenigstens einem Akkumulator (3), aufweisend
- eine erste Schnittstelle (43) zum wiederlösbaren Verbinden der Werkzeugmaschine (1) mit dem Adapter (40) sowie eine zweite Schnittstelle (44) zum wiederlösbaren Verbinden des wenigstens einen Akkumulators (3) mit dem Adapter (40);
- eine erste Steuerungselektronik (51) zum Steuern und Regeln der Funktionalität der Werkzeugmaschine (1) sowie eine zweite Steuerungselektronik (52) zum Steuern und Regeln der Funktionalität des Akkumulators (3);
- ein Schaltelement (60) zum reversiblen Einstellen der zweiten Steuerungselektronik (52) in einen Aktivierungsmodus oder Deaktivierungsmodus, wobei im Aktivierungsmodus wenigstens ein erster Transistor (53) so ansteuerbar ist, dass elektrische Energie von dem wenigstens einen Akkumulator (3) zu der Werkzeugmaschine (1) gelangen kann, **gekennzeichnet durch**
- wenigstens einen Sensor (80) zur Erfassung wenigstens eines Parameters der Werkzeugmaschine (1) und einen zweiten Transistor (57), wobei der zweite Transistor (57) ausgestaltet ist die Zuführung der elektrischen Energie von dem Akkumulator (3) an die Werkzeugmaschine (1) zumindest zeitweilig zu unterbrechen, wenn ein von dem Sensor (80) erfasster Parameter einen vorbestimmten Schwellwert erreicht.

2. Adapter (40) nach Anspruch 1,
**dadurch gekennzeichnet, dass** wenigstens eine Anzeigeeinrichtung (70) zur Anzeige wenigstens eines Zustandes des Adapters (40) enthalten ist.

3. Adapter (40) nach Anspruch 1 oder 2,
**dadurch gekennzeichnet, dass** wenigstens ein Spannungsteiler enthalten ist zur Versorgung wenigstens der ersten oder zweiten Steuerungselektronik (51, 52) mit elektrischer Energie.

4. System (100) enthaltend eine Werkzeugmaschine (1) mit wenigstens einem Akkumulator (3) zur Versorgung der Werkzeugmaschine (1) mit elektrischer Energie und einen Adapter (40) nach einem der Ansprüche 1 bis 3,
wobei der Adapter (40) zum wiederlösbaren Verbinden der Werkzeugmaschine (1) mit dem wenigstens einen Akkumulator (3) dient.

5. Verfahren zum Steuern und Regeln eines Adapters (40) nach einem der Ansprüche 1 bis 3, zum Verbinden einer Werkzeugmaschine (1) mit wenigstens einem Akkumulator (3),
**gekennzeichnet durch** die Verfahrensschritte
- Verbinden des Adapters (40) nach einem der Ansprüche 1 bis 3, mit der Werkzeugmaschine (1) und dem wenigstens einen Akkumulator (3);
- Einstellen des Adapters (40) von einem Deaktivierungsmodus in einen Aktivierungsmodus; und
- Ansteuern eines ersten Transistors (53), sodass elektrische Energie von dem Akkumulator (3) zu der Werkzeugmaschine (1) gelangen kann.

6. Verfahren nach Anspruch 5,
**gekennzeichnet durch** den Verfahrensschritt
- Anzeigen wenigstens eines Zustandes des Adapters mittels wenigstens einer Anzeigeeinrichtung (70).

## Claims

1. Adapter (40) for releasably connecting a power tool (1) to at least one rechargeable battery (3), having
- a first interface (43) for releasably connecting the power tool (1) to the adapter (40) and a second interface (44) for releasably connecting the at least one rechargeable battery (3) to the adapter (40);
- first control electronics (51) for open-loop and closed-loop control of the functionality of the power tool (1) and second control electronics (52) for open-loop and closed-loop control of the functionality of the rechargeable battery (3);
- a switching element (60) for reversibly setting the second control electronics (52) to an activation mode or deactivation mode, wherein in the activation mode at least a first transistor (53) is able to be actuated such that electrical energy can pass from the at least one rechargeable battery (3) to the power tool (1),
**characterized by**
- at least one sensor (80) for detecting at least one parameter of the power tool (1) and a second transistor (57), wherein the second transistor (57) is designed to interrupt at least temporarily the supply of the electrical energy from the rechargeable battery (3) to the power tool (1) if a parameter detected by the sensor (80) reaches a predetermined threshold value.

2. Adapter (40) according to Claim 1,
**characterized in that** at least one display device (70) is included to display at least one state of the adapter (40).

3. Adapter (40) according to Claim 1 or 2,
**characterized in that** at least one voltage divider is included to supply electrical energy to at least the first or second control electronics (51, 52).

4. System (100) including a power tool (1) with at least one rechargeable battery (3) for supplying electrical energy to the power tool (1) and an adapter (40) according to one of Claims 1 to 3, wherein the adapter (40) is used for releasably connecting the power tool (1) to the at least one rechargeable battery (3).

5. Method for open-loop and closed-loop control of an adapter (40), according to one of Claims 1 to 3, for connecting a power tool (1) to at least one rechargeable battery (3), **characterized by** the method steps of
- connecting the adapter (40), according to one of Claims 1 to 3, to the power tool (1) and the at least one rechargeable battery (3);
- setting the adapter (40) from a deactivation mode to an activation mode; and
- actuating a first transistor (53) such that electrical energy can pass from the rechargeable battery (3) to the power tool (1).

6. Method according to Claim 5,
**characterized by** the method step of
- displaying at least one state of the adapter by means of at least one display device (70).

## Revendications

1. Adaptateur (40) permettant de relier de manière amovible une machine-outil (1) à au moins un accumulateur (3), présentant
- une première interface (43) pour relier de manière amovible la machine-outil (1) à l'adaptateur (40), ainsi qu'une deuxième interface (44) pour relier de manière amovible ledit au moins un accumulateur (3) à l'adaptateur (40) ;
- une première électronique de commande (51) pour commander et réguler la fonctionnalité de la machine-outil (1), ainsi qu'une deuxième électronique de commande (52) pour commander et réguler la fonctionnalité de l'accumulateur (3) ;
- un élément de commutation (60) pour régler de manière réversible la deuxième électronique de commande (52) dans un mode d'activation ou un mode de désactivation, dans lequel, dans le mode d'activation, au moins un premier transistor (53) peut être piloté de telle sorte que de l'énergie électrique peut passer dudit au moins un accumulateur (3) à la machine-outil (1),
**caractérisé par**
- au moins un capteur (80) pour détecter au moins un paramètre de la machine-outil (1), et un deuxième transistor (57), dans lequel le deuxième transistor (57) est configuré pour couper au moins temporairement l'amenée de l'énergie électrique de l'accumulateur (3) à la machine-outil (1) lorsqu'un paramètre détecté par le capteur (80) atteint une valeur seuil prédéterminée.

2. Adaptateur (40) selon la revendication 1, **caractérisé en ce qu'**au moins un équipement d'affichage (70) pour afficher au moins un état de l'adaptateur (40) est présent.

3. Adaptateur (40) selon la revendication 1 ou 2, **caractérisé en ce qu'**au moins un diviseur de tension est présent pour alimenter au moins la première ou la deuxième électronique de commande (51, 52) en énergie électrique.

4. Système (100), comprenant une machine-outil (1) pourvue d'au moins un accumulateur (3) pour alimenter la machine-outil (1) en énergie électrique, et un adaptateur (40) selon l'une quelconque des revendications 1 à 3, dans lequel l'adaptateur (40) sert à relier de manière amovible la machine-outil (1) audit au moins un accumulateur (3).

5. Procédé permettant de commander et de réguler un adaptateur (40) selon l'une quelconque des revendications 1 à 3, pour relier une machine-outil (1) à au moins un accumulateur (3), **caractérisé par** les étapes de procédé consistant à
- relier l'adaptateur (40) selon l'une quelconque des revendications 1 à 3 à la machine-outil (1) et audit au moins un accumulateur (3) ;
- régler l'adaptateur (40) d'un mode de désactivation dans un mode d'activation ; et
- piloter un premier transistor (53) de sorte que de l'énergie électrique peut passer de l'accumulateur (3) à la machine-outil (1).

6. Procédé selon la revendication 5, **caractérisé par** l'étape de procédé consistant à
- afficher au moins un état de l'adaptateur au moyen d'au moins un équipement d'affichage (70).
